# EUROPÄISCHE PATENTANMELDUNG

(11) **EP 3 783 341 A1**
(43) Veröffentlichungstag der Anmeldung: **24.02.2021**
(21) Anmeldenummer: 19192670.8
(22) Anmeldetag: 20.08.2019
(51) Int. Cl.: G01N 21/77

(54) **GASSENSOR UND VERFAHREN ZUR DETEKTION EINES ZIELGASES**

(71) Anmelder: FRAUNHOFER-GESELLSCHAFT zur Förderung der angewandten Forschung e.V., 80686 München (DE)
(72) Erfinder: WEBER, Christian, 79110 Freiburg (DE); BAUERSFELD, Marie-Luise, 79110 Freiburg (DE); PANNEK, Carolin, 79110 Freiburg (DE)
(74) Vertreter: Lemcke, Brommer & Partner Patentanwälte Partnerschaft mbB

(57) **Zusammenfassung**

Die Erfindung betrifft einen Gassensor mit zumindest einem gassensitiven Element, dessen optische Eigenschaften sich abhängig von dem Kontakt mit einem Zielgas ändern zumindest einem Messdetektor zum Empfangen von Messstrahlung zumindest einer Messstrahlquelle, wobei das gassensitive Element in einem Strahlengang der Messstrahlung zwischen Messstrahlquelle und Messdetektor angeordnet ist und die Messstrahlquelle eine interne Messstrahlquelle des Gassensors oder eine externe Messstrahlquelle ist. Die Erfindung ist dadurch gekennzeichnet, dass der Gassensor mindestens ein Referenzelement und mindestens einen Referenzdetektor aufweist, wobei das Referenzelement im Vergleich mit dem gassensitiven Element keine oder eine zumindest geringere Sensitivität gegenüber dem Zielgas aufweist, das Referenzelement in einem Strahlengang der Messstrahlung zwischen Messstrahlquelle und Referenzdetektor angeordnet ist und dass der Gassensor zum Bilden eines Differenzsignals zwischen dem Messsignal des Messdetektors und Messsignal des Referenzdetektors ausgebildet ist.

## Beschreibung

Die Erfindung betrifft einen Gassensor gemäß Oberbegriff des Anspruchs 1 sowie ein Verfahren zur Detektion eines Zielgases gemäß Oberbegriff des Anspruchs 13.

Gassensoren dienen zur Detektion und Analyse von Gasen. Es sind Gassensoren mit physikalischen und chemischen Messprinzipien bekannt. Die vorliegende Erfindung betrifft kolorimetrische Gassensoren, bei welchen ein gassensitives Element seine optischen Eigenschaften abhängig von dem Kontakt eines Zielgases mit dem gassensitiven Element ändert. Solche kolorimetrischen Gassensoren werden insbesondere eingesetzt, wenn nur begrenzte Energie zur Verfügung steht und kostengünstige Sensoren gefordert sind wie beispielsweise bei einem Einsatz in Brandmeldern, im "Food Chain Management" oder in RFID-Labels.

Kolorimetrische Gassensoren weisen ein gassensitives Element auf, eine Messstrahlquelle zum Erzeugen von Messstrahlung und einen Messdetektor. Das gassensitive Element ist in einem Strahlengang der Messstrahlung zwischen Messstrahlquelle und Messdetektor angeordnet. Das sensorische Prinzip beruht auf einer Änderung der optischen Eigenschaften des gassensitiven Elements bei Kontakt mit dem Zielgas. Die veränderten optischen Eigenschaften des gassensitiven Elements führen zu einer Veränderung der auf den Messdetektor auftreffenden Messstrahlung in Intensität und/oder im Spektrum der Messstrahlung, sodass der Kontakt der gassensitiven Schicht mit dem Zielgas erfasst werden kann. Ebenso sind kolorimetrische Gassensoren bekannt, welche Umgebungslicht als Messstrahlung verwenden und somit keine interne Messstrahlquelle benötigen.

Typische gassensitive Elemente weisen gassensitive Farbstoffe auf, bei welchen der Kontakt mit dem Zielgas zu einem Farbumschlag führt. Hierbei ist es bekannt, in einer Transmissionsmessung, die das gassensitive Element durchdringende Messstrahlung oder in einer Reflexionsmessung, die von dem gassensitiven Element reflektierte Messstrahlung mittels des Messdetektors zu erfassen.

Der vorliegenden Erfindung liegt die Aufgabe zugrunde, die vorbekannten Gassensoren zu verbessern, sodass eine höhere Messgenauigkeit und/oder die Verwendung kostengünstigerer gassensitiver Elemente ermöglicht wird.

Gelöst ist diese Aufgabe durch einen Gassensor gemäß Anspruch 1 sowie einem Verfahren zur Detektion eines Zielgases gemäß Anspruch 13. Vorteilhafte Ausgestaltungen finden sich in den abhängigen Unteransprüchen. Der erfindungsgemäße Gassensor ist bevorzugt zur Durchführung des erfindungsgemäßen Verfahrens ausgebildet, insbesondere einer bevorzugten Ausführungsform hiervon. Das erfindungsgemäße Verfahren ist bevorzugt zur Durchführung mittels des erfindungsgemäßen Gassensors ausgebildet, insbesondere einer vorteilhaften Ausführungsform hiervon.

Die Erfindung basiert auf der Erkenntnis folgender Nachteile bei den aus dem Stand der Technik bekannten Vorrichtungen: Eine grundlegende Problematik dieser vorbekannten Vorrichtungen und Verfahren ist, dass die Farbänderung gassensitiver Farbstoffe bei der Detektion von sehr geringen Gaskonzentrationen häufig lediglich zu einer geringen Änderung des Messsignals des Messdetektors führt. Erschwerend kommt hinzu, dass in den bisher bekannten Vorrichtungen ein erheblicher Teil von Messstrahlung oder Störstrahlung ohne Interaktion mit dem gassensitiven Element auf den Messdetektor trifft. Das Gesamtmesssignal des Messdetektors beinhaltet somit nur einen sehr geringen Anteil, der sich abhängig von einem Kontakt des Zielgases mit dem gassensitiven Element ändert. Bei vorbekannten Gassensoren werden daher gassensitive Elemente mit gasochromen Farbstoffen eingesetzt, die eine starke relative Farbänderung gegenüber dem zu detektierenden Zielgas aufweisen. Hierdurch ist die Auswahl an gasochromen Farbstoffen jedoch stark begrenzt und/oder lediglich eine Sensitivität für hohe Konzentrationen des Zielgases gegeben.

Der erfindungsgemäße Gassensor weist zumindest ein gassensitives Element, dessen optische Eigenschaften sich abhängig von dem Kontakt mit einem Zielgas ändern und zumindest einen Messdetektor zum Empfangen von Messstrahlung zumindest einer Messstrahlquelle auf, wobei das gassensitive Element in einem Strahlengang der Messstrahlung zwischen Messstrahlquelle und Messdetektor angeordnet ist. Die zumindest eine Messstrahlquelle kann eine Messstrahlquelle des Gassensors sein. Ebenso liegt es im Rahmen der Erfindung, dass Strahlung, insbesondere Licht, einer externen Messstrahlquelle als Messstrahlung verwendet wird, beispielsweise Sonnenlicht oder Licht einer externen Strahlungsquelle in unmittelbarer Umgebung des Gassensors, wie beispielsweise eine Raumbeleuchtung.

Wesentlich ist, dass der Gassensor mindestens ein Referenzelement und mindestens einen Referenzdetektor aufweist, wobei das Referenzelement im Vergleich mit dem gassensitiven Element keine oder zumindest eine geringere Sensitivität gegenüber dem Zielgas aufweist. Das Referenzelement ist in einem Strahlengang der Messstrahlung zwischen Messstrahlquelle und Referenzdetektor angeordnet. Der Gassensor ist zum Bilden eines Differenzsignals zwischen dem Messsignal des Messdetektors und dem Messsignal des Referenzdetektors ausgebildet.

Die Messstrahlung der Messstrahlquelle trifft somit sowohl auf das gassensitive Element, als auch auf das Referenzelement auf. Der Messdetektor ist mit dem gassensitiven Element zusammenwirkend ausgebildet, um von dem gassensitiven Element ausgehende Strahlung zu empfangen, insbesondere Messstrahlung, welche das gassensitive Element durchdringt und/oder von diesem reflektiert wird. Der Referenzdetektor ist mit dem Referenzelement zusammenwirkend ausgebildet, um von dem Referenzelement ausgehende Strahlung zu empfangen, insbesondere Messstrahlung, welche das Referenzelement durchdringt und/oder von diesem reflektiert wird.

Durch die Bildung eines Differenzsignals können gegenüber den vorbekannten Vorrichtungen wesentlich geringere Änderungen in den optischen Eigenschaften des gassensitiven Elementes detektiert werden. Hierdurch wird eine höhere Messgenauigkeit erzielt und/oder es können kostengünstigere gassensitive Elemente verwendet werden, welche eine weniger starke Änderung der optischen Eigenschaften bei Kontakt mit dem Zielgas aufweisen, sodass auf eine größere Anzahl gassensitiver Materialien für das gassensitive Element, insbesondere auf eine größere Anzahl gasochromer Farbstoffe zurückgegriffen werden kann.

Bei dem erfindungsgemäßen Verfahren zur Detektion eines Zielgases erfolgt ein Beaufschlagen eines Messdetektors mit Messstrahlung einer Messstrahlquelle, wobei im Strahlengang der Messstrahlung zwischen Messstrahlquelle und Messdetektor ein gassensitives Element angeordnet ist.

Wesentlich ist, dass zusätzlich ein Referenzdetektor mit Messstrahlung der Messstrahlquelle beaufschlagt wird, wobei im Strahlengang der Messstrahlung zwischen Messstrahlquelle und Referenzdetektor ein Referenzelement angeordnet ist und dass ein Differenzsignal aus den Messsignalen des Messdetektors und des Referenzdetektors gebildet wird. Hierdurch ergeben sich die zuvor genannten Vorteile.

In einer vorteilhaften Ausführungsform weist das gassensitive Element ein gassensitives Material auf und das Referenzelement weist ein Referenzmaterial auf, welches hinsichtlich einer Beaufschlagung mit der Messstrahlung der Strahlungsquelle die gleichen optischen Eigenschaften aufweist wie das gassensitive Material des gassensitiven Elementes bei Abwesenheit des Zielgases. Hierdurch ergibt sich der Vorteil, dass bei Abwesenheit des Zielgases zumindest näherungsweise gleiche Bedingungen an Messdetektor und Referenzdetektor vorliegen und somit in einfacher Weise eine Abweichung dieses Zustandes zur Detektion des Zielgases ermittelt werden kann.

Bei Anwesenheit des Zielgases ändert das gassensitive Material des gassensitiven Elementes seine optischen Eigenschaften, wohingegen das Referenzmaterial des Referenzelementes inaktiviert ist, so dass keine oder zumindest nur eine geringere Änderung der optischen Eigenschaften erfolgt.

Vorteilhafterweise sind Messdetektor und Referenzdetektor derart ausgebildet, dass bei Abwesenheit des Zielgases beide Detektoren gleiche Messsignale, bevorzugt Messsignale gleicher Signalstärke, abgeben. Hierdurch ergibt sich bei Abwesenheit des Zielgases durch die Bildung des Differenzsignals ein Signal der Stärke 0 oder zumindest nahe 0, sodass in einfacher und präziser Weise eine Auswertung zur Detektion des Zielgases möglich ist.

Das Referenzelement weist bevorzugt ein gegenüber dem Zielgas inaktiviertes gassensitives Material auf. Hierdurch ergibt sich der Vorteil, dass das inaktivierte gassensitive Material des Referenzelementes dem Grunde nach die gleichen optischen Eigenschaften aufweist wie das gassensitive Material bei Abwesenheit des Zielgases. Insbesondere ist es daher vorteilhaft, dass das gassensitive Element und das Referenzelement das gleiche gassensitive Material, insbesondere den gleichen gassensitiven Farbstoff aufweisen, wobei das gassensitive Material des Referenzelementes inaktiviert ist.

Als gassensitive Materialien für das gassensitive Element werden bevorzugt an sich bekannte gasochrome Farbstoffe verwendet. Beispiele für solche Farbstoffe und die damit detektierbaren Zielgase sind in der nachfolgenden Tabelle 1 angegeben:

**Tabelle 1**

| **Farbstoff** | **Zielgas** |
|---|---|
| N,N,N',N'-Tetramethyl-p-phenylendiamin | Stickstoffdioxid (NO₂) |
| Bromphenolblau | Ammoniak (NH₃) |
| Molybdänblau | Ethylen (C₂H₄) |

Bei solchen Farbstoffen wird bevorzugt der Farbumschlag aufgrund einer Intensitätsänderung des reflektierten und/oder transmittierten Anteils der Messstrahlung detektiert. Ebenso liegt es im Rahmen der Erfindung, alternativ oder zusätzlich eine Änderung im Spektrum des transmittierten und/oder reflektierten Anteils der Messstrahlung mittels des Messdetektors zu detektieren. Die spektrale Komponente kann entweder über das veränderliche Spektrum der Strahlungsquelle (mehrere LEDs, durchstimmbares Filter, o.ä.) oder auch durch optische Filter im Aufbau ermittelt werden. Im Falle des optischen Filters kann jeweils ein Messaufbau für die verschiedenen Spektralbereich benutzt werden.

Ebenso liegt die Verwendung von gassensitiven Materialien im Rahmen der Erfindung, deren Fluoreszenz abhängig von dem Kontakt mit einem Zielgas ist. Bei Verwendung solcher gassensitiven Materialien erfolgt entsprechend eine Detektion des Fluoreszenzlichts des gassensitiven Materials mittels des Messdetektors.

Wie zuvor beschrieben ist es vorteilhaft, dass das Referenzelement das gleiche gassensitive Material wie das gassensitive Element aufweist, wobei jedoch das gassensitive Material des Referenzelementes inaktiviert wird, sodass allenfalls eine geringfügige Änderung oder bevorzugt keine Änderung der optischen Eigenschaften des inaktivierten gassensitiven Materials aufgrund des Zielgases erfolgt.

Hierbei liegen unterschiedliche Varianten im Rahmen der Erfindung, das gassensitive Material gegenüber dem Zielgas zu inaktivieren:
In einer vorteilhaften Ausführungsform ist das gassensitive Material des Referenzelementes chemisch inaktiviert.

Die chemische Inaktivierung erfolgt beispielsweise im Fall des Bromphenolblau, des Ammoniak-sensitiven Farbstoffes durch Beimischen einer pH-Pufferlösung. Diese kann aber auch bei bspw. Metallkomplexen durch Austausch von Liganden oder einer Schicht ohne Farbstoff erfolgen.

In einer weiteren vorteilhaften Ausgestaltung ist das gassensitive Material des Referenzelementes physikalisch inaktiviert. Insbesondere ist es vorteilhaft, dass ein Kontakt des Zielgases mit dem gassensitiven Material des Referenzelementes unterbunden wird. In einer konstruktiv einfachen und vorteilhaften Ausführungsform ist das Referenzelement gegen einen Kontakt mit dem Zielgas abgeschirmt, bevorzugt dadurch abgeschirmt, dass das Referenzelement eine für das Zielgas gasdichte Hülle aufweist, in welcher das gassensitive Material angeordnet ist. Die gasdichte Hülle ist bevorzugt für die Messstrahlung durchlässig, insbesondere bevorzugt transparent ausgebildet, zumindest in einem Spektralbereich der Messstrahlung, welcher mittels des Referenzdetektors detektiert wird.

Es ist vorteilhaft, dass Messdetektor und Referenzdetektor in gleicher Weise von einer Änderung der Messbedingungen beeinflusst werden, sodass zumindest näherungsweise auch eine Änderung der äußeren Messbedingungen auf das Messsignal von Referenzdetektor und Messdetektor gleich ist.

In einer vorteilhaften Ausführungsform sind daher Messdetektor und Referenzdetektor thermisch gekoppelt. Hierdurch weisen beide Detektoren die gleiche oder zumindest annähernd die gleiche Temperatur auf, sodass sich die Umgebungstemperatur bei einer Messung und insbesondere eine Änderung der Umgebungstemperatur gleich oder zumindest annähernd gleich auf das Messverhalten von Messdetektor und Referenzdetektor auswirkt.

In einer vorteilhaften Ausführungsform sind Messdetektor und Referenzdetektor mechanisch gekoppelt. Hierdurch weisen beide Detektoren die gleiche oder zumindest annähernd die Lageänderungen bei temperaturbedingten Materialausdehnungen auf, sodass sich die Umgebungstemperatur bei einer Messung und insbesondere eine Änderung der Umgebungstemperatur gleich oder zumindest annähernd gleich auf das Messverhalten von Messdetektor und Referenzdetektor auswirkt.

Insbesondere ist es vorteilhaft, dass Messdetektor und Referenzdetektor auf einem gemeinsamen Element angeordnet sind, insbesondere bevorzugt auf einem gemeinsamen thermisch leitenden Element, bevorzugt auf einem gemeinsamen Substrat, insbesondere einem gemeinsamen Siliziumsubstrat.

Es liegt im Rahmen der Erfindung, dass das Messsignal des Messdetektors einerseits und das Messsignal des Referenzdetektors andererseits zunächst mittels einer Auswerteeinheit ausgewertet wird, das heißt jedem Messsignal ein numerischer Wert zugeordnet wird, beispielsweise mittels eines Analog/DigitalWandlers. In dieser Ausführungsform erfolgt anschließend eine Differenzbildung der ermittelten numerischen Werte.

In einer vorteilhaften Ausführungsform wird das Differenzsignal zwischen dem Messsignal des Messdetektors und dem Messsignal des Referenzdetektors mittels der unverstärkten Rohsignale von Messdetektor und Referenzdetektor, insbesondere der analogen Messsignale von Messdetektor und Referenzdetektor gebildet. In dieser vorteilhaften Ausführungsform erfolgt somit eine Differenzbildung, bevor eine Umwandlung in einen numerischen Wert, beispielsweise mittels eines Analog/Digital-Wandlers, erfolgt. Hierdurch ergibt sich ein kostengünstiger Aufbau.

Insbesondere ist es vorteilhaft, Messdetektor und Referenzdetektor gegenpolig zu verschalten, sodass an einem gemeinsamen analogen Messsignalausgang eine Erhöhung des Messsignals eines Detektors zu einer Erhöhung des gesamten Signals führt und eine Erhöhung des Messsignals des anderen Detektors zu einer Erniedrigung des Gesamtsignals führt, sodass im Falle zweier Messsignale identischer Höhe der Messdetektoren ein Gesamtsignal mit Höhe 0 an dem gemeinsamen analogen Messsignalausgang anliegt.

Die Messdetektoren können als an sich bekannte Detektoren ausgebildet sein. Insbesondere ist es vorteilhaft, dass Messdetektor und/oder Referenzdetektor, bevorzugt beide Detektoren als Photodioden ausgebildet sind. Hierbei kann auf eine große Auswahl an handelsüblich verfügbarer Photodioden zurückgegriffen werden. Weiterhin ist es vorteilhaft, dass Messdetektor und Referenzdetektor antiparallel verschaltet sind. Hierdurch wird in konstruktiv einfacher Weise durch antiparalleles Verschalten der als Photodioden ausgebildeten Detektoren eine Differenzbildung der analogen Messsignale erzielt.

In einer vorteilhaften Ausführungsform ist die optische Weglänge des Strahlengangs der Messstrahlung ausgehend von der Messstrahlquelle über das gassensitive Element zu dem Messdetektor gleich der optischen Weglänge des Strahlengangs der Messstrahlung ausgehend von der Messstrahlquelle über das Referenzelement zu dem Referenzdetektor. Hierdurch ergibt sich der Vorteil, dass Beeinträchtigungen im Strahlengang beispielsweise durch Staub sich mit hoher Wahrscheinlichkeit in gleicher Weise auf beide Strahlengänge auswirken und somit nicht oder nur geringfügig zu einem Differenzsignal zwischen Messdetektor und Referenzdetektor führen. Ebenso wirken sich Änderungen im Strahlengang beispielsweise durch thermische Ausdehnung auf beide Strahlengänge gleich oder zumindest annähernd gleich aus, sodass auch hier Störfaktoren durch vorliegend thermisch bedingte Differenzsignale vermieden oder zumindest verringert werden.

Vorteilhafterweise ist der Strahlengang der Messstrahlung ausgehend von der Messstrahlquelle über das gassensitive Element zu dem Messdetektor symmetrisch zu dem Strahlengang der Messstrahlung ausgehend von der Messstrahlquelle über das Referenzelement zu dem Referenzdetektor. Hierdurch wird zusätzlich die Ausbildung eines Differenzsignals als Störfaktor bei Änderungen der Geometrie beispielsweise aufgrund thermischer Ausdehnung vermieden. Insbesondere ist es daher vorteilhaft, dass die vorgenannte Symmetrie eine Achsensymmetrie ist, bevorzugt eine Spiegelsymmetrie.

Eine weitere Erhöhung der Messgenauigkeit wird in einer vorteilhaften Ausführungsform erzielt, wobei der Gassensor einen Kontrolldetektor für die Messstrahlquelle aufweist, welcher in einem Strahlengang der Messstrahlung angeordnet und ausgebildet ist, um die integrale oder spektrale Intensität im Ganzen oder in Teilen des Spektrums der Messstrahlquelle zu messen. Hierdurch können Änderungen der Messstrahlung aufgrund von Fluktuationen der Messstrahlquelle, Abnutzung oder Verschmutzung der Messstrahlquelle detektiert und bei der Auswertung des Differenzsignals berücksichtigt werden.

Es liegt im Rahmen der Erfindung, dass die Messstrahlung als Freistrahl zwischen Messstrahlquelle, gassensitivem Element und Messdetektor und/oder zwischen Messstrahlquelle, Referenzelement und Referenzdetektor verläuft.

In einer vorteilhaften Ausführungsform weist der Gassensor zumindest einen Wellenleiter auf und zumindest das gassensitive Element, bevorzugt sowohl das gassensitive Element als auch das Referenzelement sind in und/oder an einer Wandfläche des Wellenleiters angeordnet, insbesondere zur Durchführung einer Evaneszenzfeldsensorik. Hierdurch ist ein besonders robuster Aufbau gegeben.

Wie zuvor beschrieben, kann der Gassensor nach dem Prinzip der Transmissionsmessung und/oder nach dem Prinzip der Reflexionsmessung ausgebildet sein.

In einer vorteilhaften Ausführungsform des erfindungsgemäßen Verfahrens wird mittels des Messdetektors das gassensitive Element durchdringende Messstrahlung und mittels des Referenzdetektors das Referenzelement durchdringende Messstrahlung gemessen.

In einer alternativen Ausführungsform des erfindungsgemäßen Verfahrens wird mittels des Messdetektors und dem gassensitiven Element reflektierte Messstrahlung und mittels des Referenzdetektors von dem Referenzelement reflektierte Messstrahlung gemessen.

Weitere vorteilhafte Merkmale und Ausgestaltungen werden im Folgenden anhand der Figuren und Ausführungsbeispielen beschrieben. Dabei zeigen die Figuren 1 bis 5 jeweils ein Ausführungsbeispiel eines erfindungsgemäßen Gassensors, wobei
- Figur 1: einen Gassensor mit Transmissionsmessung;
- Figur 2: einen Gassensor mit Reflexionsmessung;
- Figur 3: einen Gassensor mit physikalisch inaktiviertem gassensitiven Material eines Referenzelementes,
- Figur 4: einen Gassensor mit Lichtleiter und
- Figur 5: einen Gassensor mit externer Lichtquelle zeigt.

Die Figuren zeigen schematische, nicht maßstabsgetreue Darstellungen. Gleiche Bezugszeichen in den Figuren bezeichnen gleiche oder gleichwirkende Elemente.

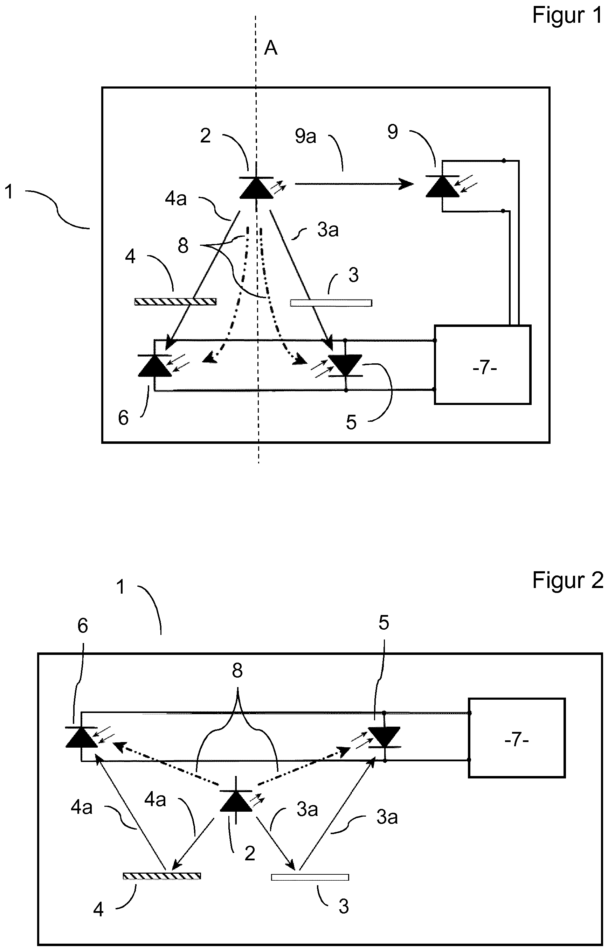

Das in Figur 1 dargestellte erste Ausführungsbeispiel eines erfindungsgemäßen Gassensors 1 weist eine als LED ausgebildete Messstrahlquelle 2 zum Erzeugen von Messstrahlung, vorliegend mit einer Wellenlänge von 580 nm auf. Die Messstrahlquelle 2 ist hierzu mit einer elektrischen Energiequelle verbunden, vorliegend einer Batterie. Der Gassensor 1 weist weiterhin ein gassensitives Element 3 auf, dessen optische Eigenschaften sich abhängig von dem Kontakt mit einem Zielgas ändern. Das gassensitive Element weist hierzu einen gasochromen Farbstoff auf, beispielsweise einen Farbstoff gemäß der vorangehenden Tabelle 1, vorliegend Bromphenolblau zur Detektion von Ammoniak.

Das gassensitive Element 3 ist somit in einem als durchgezogenen Pfeil dargestellten Strahlengang 3a der Messstrahlung zwischen Messstrahlquelle 2 und einem Messdetektor 5 des Gassensors 1 angeordnet.

Der Gassensor weist ein als umgebendes Rechteck dargestelltes Gehäuse auf, welches Schlitze zum Luft- und Gasaustausch mit der Umgebung aufweist. Mit der vorbeschriebenen Konstellation kann an sich bereits eine Detektion des Zielgases, vorliegend Ammoniak, erfolgen. Allerdings wird der Messdetektor 5 ebenso durch Störstrahlung beaufschlagt, wie beispielsweise diffus reflektierte Messstrahlung der Messstrahlquelle 2, welche auf den Messdetektor 5 trifft, ohne das gassensitive Element 3 zu durchdringen. Störstrahlung ist in den Figuren durch Pfeile mit Strich-Punkt-Markierung skizziert und mit dem Bezugszeichen 8 versehen.

Der Gassensor 1 weist daher zusätzlich ein Referenzelement 4 auf sowie einen Referenzdetektor 6. Das Referenzelement 4 ist in einem Strahlengang 4a der Messstrahlung zwischen Messstrahlquelle 2 und Referenzdetektor 6 angeordnet. Das Referenzelement 4 weist ein inaktiviertes gassensitives Material auf, vorliegend Bromphenolblau, welches durch Beimischen einer pH-Pufferlösung chemisch inaktiviert wurde.

Hierdurch weisen Referenzelement 4 und gassensitives Element 3 bei Abwesenheit von Ammoniak die gleichen oder zumindest näherungsweise gleichen Transmissionseigenschaften auf.

Referenzdetektor 6 und Messdetektor 5 sind vorliegend als Photodiode ausgebildet und weisen den gleichen Aufbau und somit auch das gleiche Messverhalten auf.

Wie in Figur 1 ersichtlich, sind Referenzdetektor 6 und Messdetektor 5 antiparallel verschaltet (ersichtlich durch die umgekehrte Diodenrichtung der dargestellten Photodioden-Symbole), sodass in einfacher und robuster Weise ein Differenzsignal zwischen dem Messsignal des Messdetektors 5 und des Referenzdetektors 6 gebildet wird.

Der Gassensor 1 weist eine Auswerteeinheit 7 auf, zum Auswerten des vorbeschriebenen Differenzsignals. Hierzu weist die Auswerteeinheit einen Analog/Digital-Wandler, eine Rechnereinheit sowie einen Speicher auf, um das Differenzsignal numerisch abzuspeichern.

Der Gassensor gemäß Figur 1 weist zusätzlich einen Kontrolldetektor 9 auf, welcher in einem Strahlengang 9a der Messstrahlung der Messstrahlquelle 2 angeordnet ist. Der Kontrolldetektor 9 ist ausgebildet, die Intensität der Messstrahlung der Messstrahlquelle 2 zu messen und ist ebenfalls mit der Auswerteeinheit 7 verbunden, sodass bei einer Auswertung des Differenzsignals von Referenzdetektor 6 und Messdetektor 5 zusätzlich eine Änderung der Lichtintensität der Messstrahlquelle 2 berücksichtigt werden kann, beispielsweise indem stets auf eine normierte Intensität skaliert wird.

In Figur 1 ersichtlich, sind die Strahlengänge 3a und 4a zwischen Messstrahlquelle 2 und gassensitivem Element 3 einerseits und Messstrahlquelle 2 und Referenzelement 4 andererseits spiegelsymmetrisch zu einer senkrecht zur Zeichenebene in Figur 1 stehenden Ebene A ausgebildet. Ebenso sind die optischen Weglängen der Strahlengänge 3a und 4a identisch.

In den Figuren 2 bis 4 ist jeweils ein weiteres Ausführungsbeispiel eines erfindungsgemäßen Gassensors dargestellt. Diese Ausführungsbeispiele weisen in vielerlei Hinsicht den gleichen Aufbau und die gleichen Elemente wie das in Figur 1 gezeigte erste Ausführungsbeispiel auf. Zur Vermeidung von Wiederholungen wird nachfolgend daher lediglich auf die wesentlichen Unterschiede eingegangen:
Das in Figur 2 dargestellte zweite Ausführungsbeispiel ist zur Reflexionsmessung ausgebildet. Entsprechend wird mit dem Messdetektor 5 an dem gassensitiven Element 3 reflektierte Strahlung und mit dem Referenzdetektor 6 an dem Referenzelement 4 reflektierte Messstrahlung der Messstrahlquelle 2 detektiert.

Das gassensitive Material des gassensitiven Elementes 3 ist vorliegend ein gassensitiver NO₂-Farbstoff auf Silica-Partikeln. Das Referenzmaterial des Referenzelementes 4 ist vorliegend ebenfalls aus Silica-Partikeln ausgebildet, jedoch ohne den gassensitiven NO₂-Farbstoff. In einer alternativen Ausführungsform ist das Referenzmaterial als Farbschicht mit einem gegenüber dem Zielgas nicht-gassensitivem Farbstoff ausgebildet, wobei die Farbe der Farbschicht des Referenzmaterials der Farbe des gassensitiven Materials bei Abwesenheit des Zielgases entspricht.

Das zweite Ausführungsbeispiel weist einen vereinfachten Aufbau auf, bei welchem auf den Kontrolldetektor 9 verzichtet wurde. Auch hier sind die als Dioden ausgebildeten Detektoren 5 und 6 antiparallel verschaltet und mit der Auswerteeinheit 7 verbunden.

Auch bei dem zweiten Ausführungsbeispiel sind die Strahlengänge 3a und 4a spiegelsymmetrisch und weisen die gleiche optische Weglänge auf.

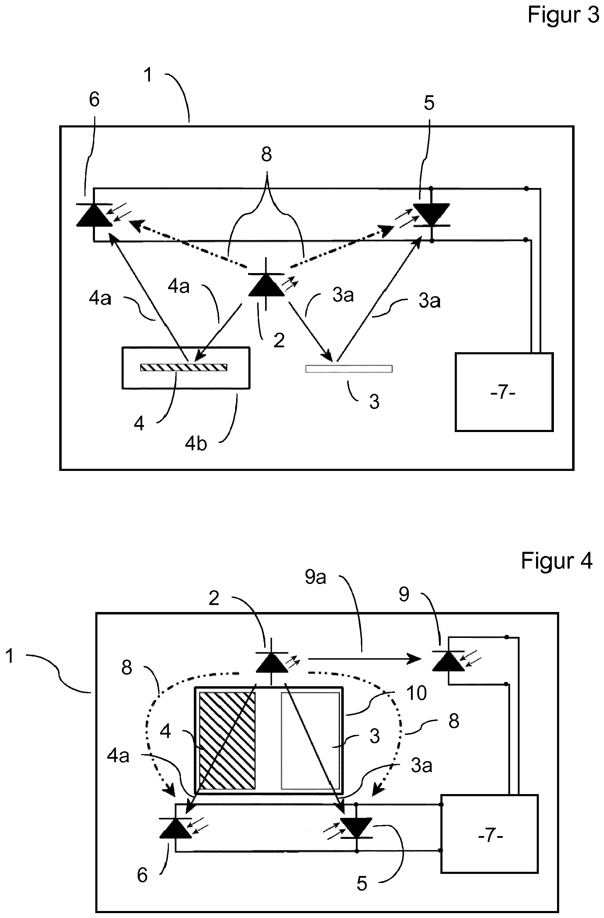

In Figur 3 ist ein drittes Ausführungsbeispiel eines erfindungsgemäßen Gassensors gezeigt, welches ebenfalls zur Reflexionsmessung ausgebildet ist und somit einen analogen Aufbau zu dem in Figur 2 gezeigten zweiten Ausführungsbeispiel aufweist.

Bei dem dritten Ausführungsbeispiel weist das gassensitive Element 3 als gassensitives Material Ruthenium(II)-Komplexe mit α-Dimin-Liganden auf, welches abhängig von einem Kontakt mit dem Zielgas Sauerstoff weniger Fluoreszenzlicht (Fluoreszenz Quenching) detektiert. In diesem Fall ist die Messstrahlung somit im Strahlengang 3a zwischen Messstrahlquelle 2 und gassensitivem Element 3 anders ausgebildet, bzw. weist ein anderes Spektrum auf, als die Messstrahlung im Strahlengang 3a zwischen gassensitivem Element 3 und Messdetektor 5.

Das Referenzelement 4 weist ebenfalls Ruthenium(II)-Komplexe mit α-Dimin-Liganden als gassensitives Material auf. Dieses gassensitive Material ist jedoch inaktiviert, indem das Referenzelement 4 eine gasdichte, optisch transparente Hülle 4b aufweist. Durch diese physikalische Inaktivierung kann somit kein Zielgas zu dem gassensitiven Material des Referenzelementes 4 gelangen. Figur 4 zeigt ein viertes Ausführungsbeispiel eines erfindungsgemäßen Gassensors 1, welches einen analogen Aufbau zu dem ersten Ausführungsbeispiel gemäß Figur 1 aufweist.

Im Unterschied zu dem ersten Ausführungsbeispiel weist der Gassensor gemäß dem vierten Ausführungsbeispiel einen Wellenleiter 10 auf, welcher sowohl im Strahlengang 3a zwischen Messstrahlquelle 2 und Messdetektor 5, als auch im Strahlengang 4a zwischen Messstrahlquelle 2 und Referenzdetektor 6 angeordnet ist. In einem in Figur 4 rechtsliegenden Bereich ist an der Außenwand des Wellenleiters 10 Bromphenolblau als gassensitives Material angeordnet. Diese Beschichtung der Außenwand des Wellenleiters mit Bromphenolblau stellt somit das gassensitive Element dar. Ebenso ist in dem schraffiert gezeigten Bereich an der Außenwand des Wellenleiters 10 chemisch inaktiviertes Bromphenolblau angeordnet. Diese Beschichtung mit chemisch inaktiviertem Bromphenolblau stellt somit das Referenzelement 4 dar. Die Wechselwirkung im Strahlengang 3a mit dem gassensitiven Element 3 einerseits und im Strahlengang 4a mit dem Referenzelement 4 andererseits erfolgt jeweils über die Evaneszenzfelder, es liegt somit das Prinzip der Evaneszenzfeldsensorik vor.

Die in den Figuren 1 bis 4 dargestellten Ausführungsbeispiele weisen jeweils eine interne Messstrahlquelle 2 des Gassensors 1 auf. Ebenso liegt es im Rahmen der Erfindung, Messstrahlung einer externen Messstrahlquelle zu verwenden.

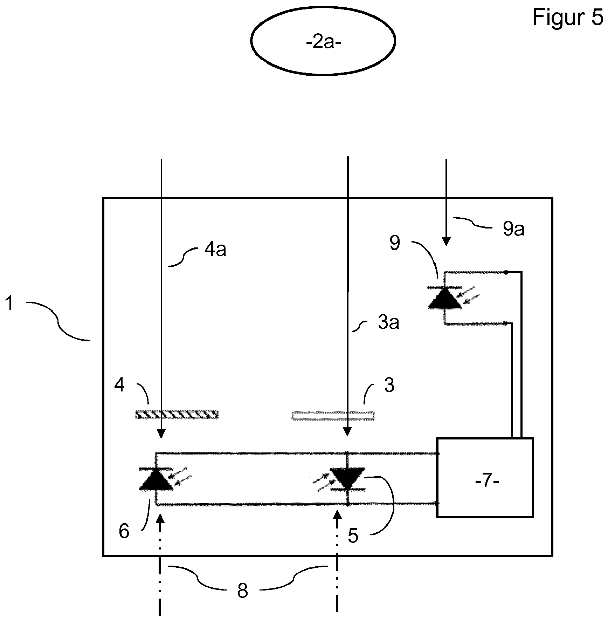

In Figur 5 ist ein weiteres Ausführungsbeispiel eines erfindungsgemäßen Gassensors 1 dargestellt, welches weitgehend den gleichen Aufbau wie das in Figur 1 dargestellte Ausführungsbeispiel aufweist, jedoch keine interne Messstrahlquelle. Stattdessen weist der Gassensor gemäß Figur 5 Öffnungen für das Umgebungslicht auf, so dass bei Benutzung am Tag Sonnenlicht als Messstrahlung und somit die Sonne als Messstrahlquelle 2a verwendet wird oder ebenso eine Raumbeleuchtung wie beispielsweise eine Deckenlampe als externe Messstrahlquelle verwendet werden kann. Auch hier erfolgt eine Transmissionsmessung, wobei die Messstrahlung gemäß Strahlengang 4a das Referenzelement 4 durchdringt und auf den Referenzdetektor 6 auftrifft sowie gemäß Strahlengang 3a das gassensitive Element 3 durchdringt und auf den Messdetektor 5 auftrifft. Die weitere Auswertung erfolgt wie zu Figur 1 beschrieben.

Insbesondere bei Verwendung einer externen Strahlungsquelle als Messstrahlquelle 2a unterliegt die Messstrahlung typischerweise Intensitätsschwankungen. Daher weist auch das in Figur 5 gezeigte Ausführungsbeispiel einen Kontrolldetektor 9 auf, um wie zuvor beschrieben Intensitätsänderungen der Messstrahlung bei der Auswertung mittels der Auswerteeinheit 7 zu berücksichtigen.

### Bezugszeichen

- 1: Gassensor
- 2, 2a: Messstrahlquelle
- 3: gassensitives Element
- 3a: Strahlengang
- 4: Referenzelement
- 4a: Strahlengang
- 4b: gasdichte Hülle
- 5: Messdetektor
- 6: Referenzdetektor
- 7: Auswerteeinheit
- 8: Störstrahlung
- 9: Kontrolldetektor
- 9a: Strahlengang
- 10: Wellenleiter

## Patentansprüche

1. Gassensor (1)
mit zumindest einem gassensitiven Element (3), dessen optische Eigenschaften sich abhängig von dem Kontakt mit einem Zielgas ändern und zumindest einem Messdetektor (5) zum Empfangen von Messstrahlung zumindest einer Messstrahlquelle (2, 2a), wobei das gassensitive Element (3) in einem Strahlengang (3a) der Messstrahlung zwischen Messstrahlquelle (2) und Messdetektor (5) angeordnet ist und die zumindest eine Messstrahlquelle (2) eine interne Messstrahlquelle des Gassensors (1) oder eine externe Messstrahlquelle (2a) ist, **dadurch gekennzeichnet,**
**dass** der Gassensor (1) mindestens ein Referenzelement (4) und mindestens einen Referenzdetektor (6) aufweist, wobei das Referenzelement (4) im Vergleich mit dem gassensitiven Element (3) keine oder eine zumindest geringere Sensitivität gegenüber dem Zielgas aufweist
und dieses Referenzelement (4) in einem Strahlengang (4a) der Messstrahlung zwischen Messstrahlquelle (2, 2a) und Referenzdetektor (6) angeordnet ist und
**dass** der Gassensor (1) zum Bilden eines Differenzsignals zwischen dem Messsignal des Messdetektors und Messsignal des Referenzdetektors ausgebildet ist.

2. Gassensor (1) nach Anspruch 1,
**dadurch gekennzeichnet,**
**dass** das gassensitive Element (3) ein gassensitives Material aufweist und das Referenzelement (4) ein Referenzmaterial aufweist, welches hinsichtlich einer Beaufschlagung mit der Messstrahlung der Strahlungsquelle die gleichen optischen Eigenschaften aufweist wie das gassensitive Material des gassensitiven Elementes (3) bei Abwesenheit des Zielgases.

3. Gassensor (1) nach einem der vorangegangenen Ansprüche,
**dadurch gekennzeichnet,**
**dass** das Referenzelement (4) einen gegenüber dem Zielgas inaktiviertes gassensitives Material aufweist, insbesondere,
**dass** das gassensitive Element (3) und das Referenzelement (4) das gleiche gassensitive Material, insbesondere den gleichen gassensitiven Farbstoff aufweisen, wobei das gassensitive Material des Referenzelementes (4) inaktiviert ist.

4. Gassensor (1) nach Anspruch 3,
**dadurch gekennzeichnet,**
**dass** das gassensitive Material des Referenzelementes (4) chemisch inaktiviert ist.

5. Gassensor (1) nach einem der Ansprüche 3 bis 4,
**dadurch gekennzeichnet,**
**dass** das gassensitive Material des Referenzelementes (4) physikalisch inaktiviert ist, insbesondere, dass das gassensitive Material des Referenzelementes (4) gegen einen Kontakt mit dem Zielgas abgeschirmt ist, bevorzugt, indem das Referenzelement (4) eine für das Zielgas gasdichte Hülle (4b) aufweist, in welcher das gassensitive Material angeordnet ist.

6. Gassensor (1) nach einem der vorangegangenen Ansprüche,
**dadurch gekennzeichnet,**
**dass** der Messdetektor (5) und der Referenzdetektor (6) thermisch und/oder mechanisch gekoppelt sind, insbesondere, dass der Messdetektor (5) und der Referenzdetektor (6) auf einem gemeinsamen Element angeordnet sind.

7. Gassensor (1) nach einem der vorangegangen Ansprüche,
**dadurch gekennzeichnet,**
**dass** das Differenzsignal zwischen dem Messsignal des Messdetektors (5) und Messsignal des Referenzdetektors (6) mittels unverstärkten Rohsignale, insbesondere der analogen Messsignale von Messdetektor (5) und Referenzdetektor (6) gebildet wird.

8. Gassensor (1) nach einem Anspruch 7,
**dadurch gekennzeichnet,**
**dass** der Messdetektor (5) und der Referenzdetektor (6) als Photodioden ausgebildet sind, wobei Messdetektor (5) und Referenzdetektor (6) antiparallel verschaltet sind.

9. Gassensor (1) nach einem der vorangegangenen Ansprüche,
**dadurch gekennzeichnet,**
**dass** die optische Weglänge des Strahlengangs der Messstrahlung ausgehend von der Messstrahlquelle (2, 2a) über das gassensitive Element (3) zu dem Messdetektor (5) gleich der optischen Weglänge des Strahlengangs der Messstrahlung ausgehend von der Messstrahlquelle (2, 2a) über das Referenzelement (4) zu dem Referenzdetektor (6) ist.

10. Gassensor (1) nach einem der vorangegangenen Ansprüche,
**dadurch gekennzeichnet,**
**dass** der Strahlengang (3a) der Messstrahlung ausgehend von der Messstrahlquelle (2, 2a) über das gassensitive Element (3) zu dem Messdetektor (5) symmetrisch zu dem Strahlengang (4a) der Messstrahlung ausgehend von der Messstrahlquelle (2, 2a) über das Referenzelement (4) zu dem Referenzdetektor (6) ist, insbesondere achsensymmetrisch, bevorzugt spiegelsymmetrisch.

11. Gassensor (1) nach einem der vorangegangenen Ansprüche,
**dadurch gekennzeichnet,**
**dass** der Gassensor (1) einen Kontrolldetektor (9) für die Messstrahlquelle (2, 2a) aufweist, welcher in einem Strahlengang der Messstrahlung angeordnet und ausgebildet ist, um die integrale oder spektrale Intensität im Ganzen oder in Teilen des Spektrums der Messstrahlquelle (2, 2a) zu messen.

12. Gassensor (1) nach einem der vorangegangenen Ansprüche,
**dadurch gekennzeichnet,**
**dass** der Gassensor (1) zumindest einen Wellenleiter (10) aufweist und das zumindest das gassensitive Element (3), bevorzugt das gassensitive Element (3) und das Referenzelement (4), an einer Wandfläche oder im Wellenleiter angeordnet ist, insbesondere zur Durchführung einer Evaneszenzfeldsensorik.

13. Verfahren zur Detektion eines Zielgases
mit den Verfahrensschritten
Beaufschlagen eines Messdetektors mit Messstrahlung einer Messstrahlquelle (2, 2a), wobei im Strahlengang (3a) der Messstrahlung zwischen Messstrahlquelle (2, 2a) und Messdetektor (5) ein gassensitives Element (3) angeordnet ist,
**dadurch gekennzeichnet,**
**dass** zusätzlich ein Referenzdetektor (6) mit Messstrahlung der Messstrahlquelle (2, 2a) beaufschlagt wird, wobei im Strahlengang (4a) der Messstrahlung zwischen Messstrahlquelle (2, 2a) und Referenzdetektor (6) ein Referenzelement (4) angeordnet ist und dass ein Differenzsignal aus den Messsignalen des Messdetektors (5) und des Referenzdetektors (6) gebildet wird.

14. Verfahren nach Anspruch 13,
**dadurch gekennzeichnet,**
**dass** mittels des Messdetektors (5) das gassensitive Element (3) durchdringende Messstrahlung und mittels des Referenzdetektors (6) das Referenzelement (4) durchdringende Messstrahlung gemessen wird.

15. Verfahren nach Anspruch 13,
**dadurch gekennzeichnet,**
**dass** mittels des Messdetektors (5) von dem gassensitiven Element (3) reflektierte Messstrahlung und mittels des Referenzdetektors (6) von dem Referenzelement (4) reflektierte Messstrahlung gemessen wird.
